# EUROPEAN PATENT SPECIFICATION

(11) **EP 4 269 240 B1**
(45) Date of publication and mention of the grant of the patent: **26.02.2025**
(21) Application number: 21909994.2
(22) Date of filing: 08.11.2021
(51) Int. Cl.: B64D 35/026, B64D 27/24, B64D 35/06, H02K 7/116, F16H 55/22, B64C 11/02

(54) **MOTOR UNIT AND FLYING OBJECT**
MOTOREINHEIT UND FLUGOBJEKT
UNITÉ DE MOTEUR ET OBJET VOLANT

(30) Priority: 22.12.2020 JP 2020212813
(43) Date of publication of application: 01.11.2023
(73) Proprietor: Panasonic Intellectual Property Management Co., Ltd., Osaka-shi, Osaka 540-6207 (JP)
(72) Inventor: SATO, Daisuke, Kadoma-shi, Osaka 571-0057 (JP)
(74) Representative: SSM Sandmair
(86) International application number: PCT/JP2021/040919
(87) International publication number: WO 2022/137840

(56) References cited:
- EP-A1- 3 680 174
- EP-B1- 3 294 623
- WO-A1-2015/108147
- WO-A1-2018/056230
- WO-A1-2019/123772
- WO-A1-2019/167302
- US-A1- 2020 056 686
- US-A1- 2020 216 183
- US-A1- 2020 227 988

## Description

### TECHNICAL FIELD

The present disclosure relates to a motor unit and a flying object.

### BACKGROUND ART

PTL 1 discloses an industrial unmanned helicopter. This industrial unmanned helicopter includes a first main rotor, a second main rotor, a drive device that rotationally drives the second main rotor, and a drive transmission member that transmits a rotational force of the second main rotor to the first main rotor by reversing a rotational direction.

In the industrial unmanned helicopter described above, the driving force transmission member is positioned between the first main rotor and the second main rotor in a rotation axis direction in which the rotation axis of the first main rotor extends. Therefore, there is a problem that a part including the first main rotor, the second main rotor, the drive device, and the driving force transmission member tends to become large in the rotation axis direction in which the rotation axis of the first main rotor extends. PTL 2 discloses a jam-tolerant electromechanical linear actuator having a contra-rotating axial flux permanent magnet (PM) motor having a first and second rotor shafts in a motor housing. The actuator also includes a first speed reduction mechanism operably coupled to the first rotor shaft and a second speed reduction mechanism operably coupled to the second rotor shaft; a first output shaft operably coupled to a output of the first speed reduction mechanism and a second output shaft operably coupled to an output of the second speed reduction mechanism. PTL 3 discloses a rotary propulsion system includes a fan arranged along a rotation axis, an electric motor having windings and a permanent magnet arranged along the rotation axis and operatively connected to the fan, and a reduction gear set. The reduction gear set extends about the rotation axis and couples the electric motor to the fan. PTL 4 discloses a marine vessel propulsion device including an electric motor, propeller means driven by the electric motor and gear means drivingly connecting the electric motor to the propeller means.

### Citation List

### Patent Literature

PTL 1: Unexamined Japanese Patent Publication No. 2019-151168. PTL 2: US 2020/056686 A1; PTL 3: EP 3 680 174 A1; PTL 4: EP 3 294 623 B1.

### SUMMARY OF THE INVENTION

The present disclosure has been made in view of the above circumstances. An object of the present disclosure is to provide a motor unit capable of suppressing an increase in size of the motor unit in a direction in which an axial center of a rotor extends, and a flying object including the motor unit.

A motor unit according to one aspect of the present disclosure includes a stator, a rotor, and a gear unit. The rotor is positioned around the stator and rotates by a magnetic force generated in the stator to generate a rotational force of a first rotary vane. The gear unit includes a plurality of gears, and converts a rotational force generated by the rotor to rotate a second rotary vane in an inverse direction to a rotation direction of the first rotary vane. At least a part of the plurality of gears are positioned inside the stator.

It is preferable that half or more of the plurality of gears are positioned inside the stator.

The motor unit may further include a first shaft that transmits the rotational force generated by the rotor to the first rotary vane, and a second shaft that transmits the rotational force generated by the gear unit to the second rotary vane. It is preferable that the first shaft is formed in a tubular shape, is positioned around the second shaft, and is rotatably supported by the second shaft.

It is preferable that the plurality of gears include a gear connected to the rotor.

It is preferable that the gear unit includes, as the plurality of gears, a first bevel gear that rotates in a rotation direction of the rotor by the rotational force generated by the rotor, a second bevel gear that meshes with the first bevel gear, and a third bevel gear that meshes with the second bevel gear and rotates in a direction opposite to the first bevel gear to generate a rotational force of the second rotary vane.

It is preferable that the motor unit further includes the first shaft that transmits the rotational force generated by the rotor to the first rotary vane, and the second shaft that transmits the rotational force generated by the gear unit to the second rotary vane. It is preferable that the gear unit includes, as the plurality of bevel gears, the first bevel gear that rotates in a rotation direction of the rotor by the rotational force generated by the rotor, the second bevel gear that meshes with the first bevel gear, and the third bevel gear that meshes with the second bevel gear and rotates in a direction opposite to the first bevel gear to generate a rotational force of the second rotary vane, the first shaft rotates integrally with the first bevel gear, and the second shaft rotates integrally with the third bevel gear.

It is preferable that the first bevel gear is a bevel gear connected to the rotor.

It is preferable that the motor unit includes: a lubricant that lubricates a mesh part of the plurality of gears; a cover member that rotates together with the rotor; an accommodating part that is positioned inside the stator, includes an opening covered by the cover member, and accommodates the plurality of gears and the lubricant; and a magnetic fluid that seals between the accommodating part and the cover member.

It is preferable that the motor unit further includes the first rotary vane and the second rotary vane.

A flying object according to another aspect of the present disclosure includes a body and the motor unit attached to this body.

The motor unit and the flying object according to the above aspects can suppress an increase in size in the axial center direction of the rotor of a motor unit.

### BRIEF DESCRIPTION OF THE DRAWINGS

Fig. 1 is a perspective view of a motor unit according to an exemplary embodiment.
Fig. 2 is a perspective cross-sectional view of the motor unit.
Fig. 3 is a top view of a flying object including the motor unit.
Fig. 4 is a perspective view of another flying object including the motor unit.
Fig. 5 is a perspective view of still another flying object including the motor unit.
Fig. 6 is an enlarged cross-sectional view of a part indicated by A1 in Fig. 2.

### DESCRIPTION OF EMBODIMENT

Hereinafter, a motor unit and a flying object of an exemplary embodiment of the present disclosure will be described.

### (1) Exemplary embodiment

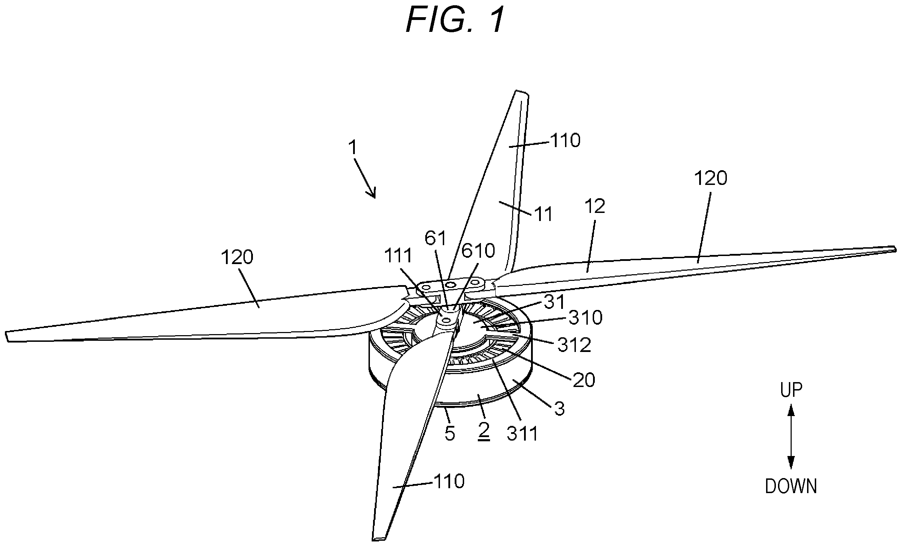

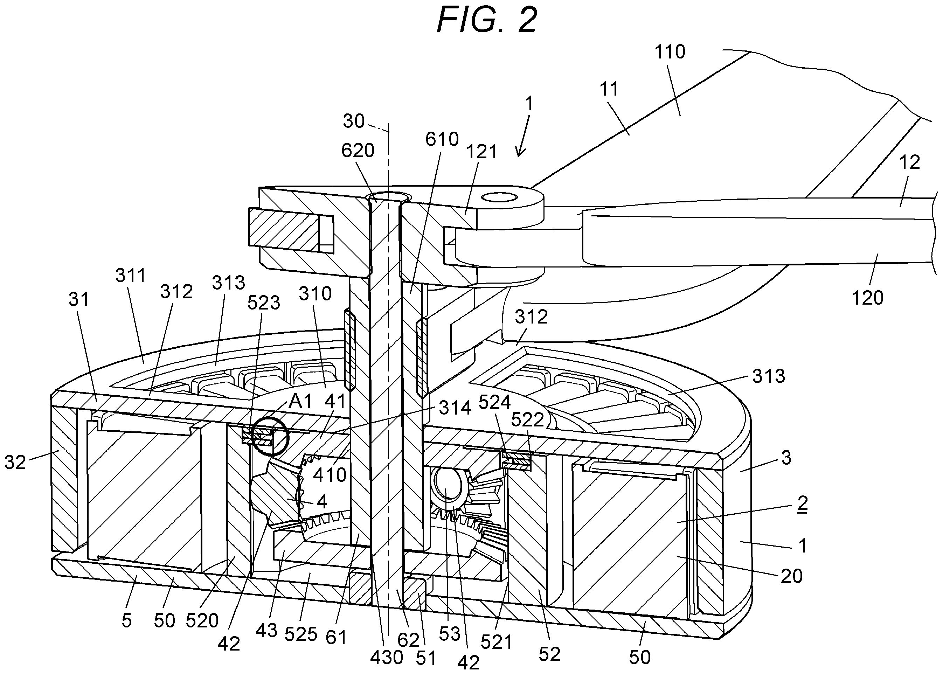

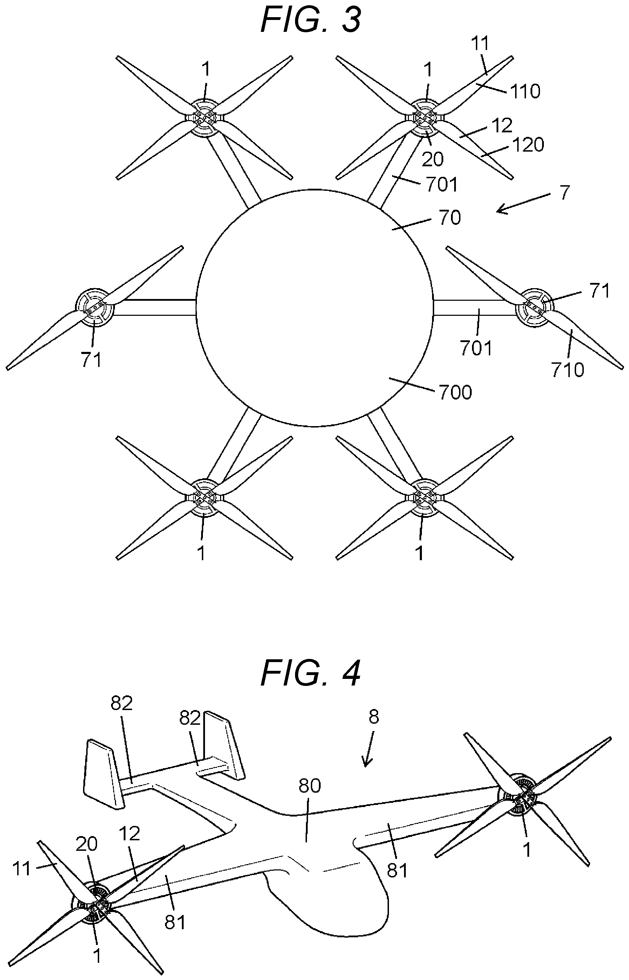

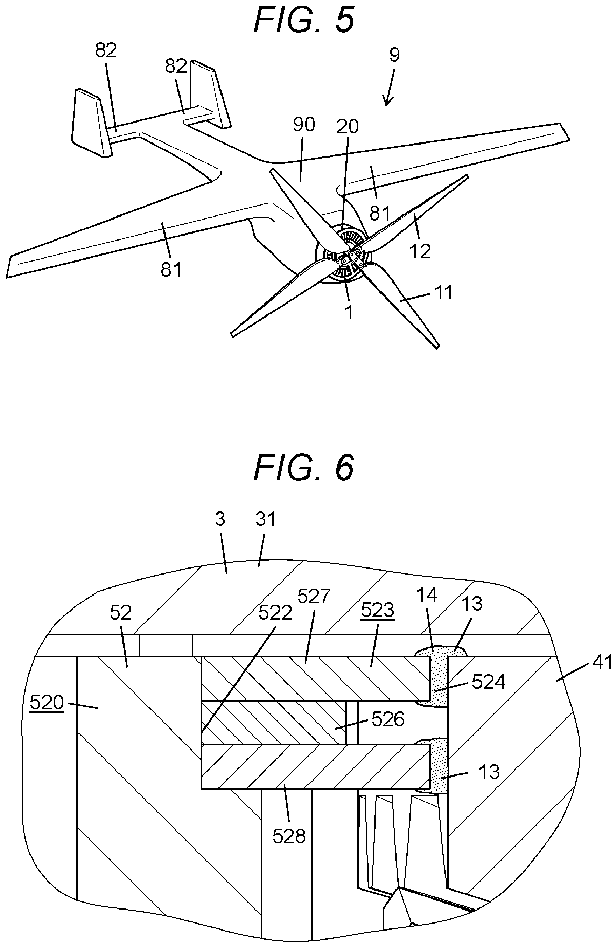

Fig. 1 is a perspective view of motor unit 1 according to an exemplary embodiment. Fig. 2 is a perspective cross-sectional view of motor unit 1. Motor unit 1 is a contra-rotating rotor that rotates coaxially arranged two rotary vanes 11, 12 in inverse directions to each other. For example, as illustrated in Figs. 3 to 5, motor unit 1 is mounted on flying objects 7, 8, 9 as a rotor or a propeller, and is used to obtain propulsion force of flying objects 7, 8, 9. Fig. 3 is a top view of flying object 7 including motor unit 1. Fig. 4 is a perspective view of another flying object 8 including motor unit 1. Fig. 5 is a perspective view of still another flying object 9 including motor unit 1.

As illustrated in Figs. 1 and 2, motor unit 1 includes motor 2, first rotary vane 11, second rotary vane 12, and gear unit 4.

Motor 2 solely generates the driving force of first rotary vane 11 and the driving force of second rotary vane 12. That is, motor 2 is shared as a drive source of first rotary vane 11 and a drive source of second rotary vane 12.

Motor 2 is a brushless motor. Motor 2 includes stator 20 and rotor 3 that rotates by a magnetic force generated in stator 20. Motor 2 is an outer rotor type motor in which a magnet included in rotor 3 is positioned around stator 20.

Rotor 3 generates a rotational force of first rotary vane 11. The rotational force of rotor 3 is transmitted to first rotary vane 11 without changing the orientation of the force. Due to this, first rotary vane 11 rotates in the same direction as rotor 3 together with rotor 3 about axial center 30, which is the rotation center of rotor 3, and generates a propulsion force in one direction parallel to axial center 30 of rotor 3.

The rotational force of rotor 3 is transmitted to second rotary vane 12 via gear unit 4. Gear unit 4 converts the rotational force of rotor 3 to generate a rotational force for rotating second rotary vane 12 in an inverse direction to the rotation direction of first rotary vane 11. Due to this, second rotary vane 12 rotates in an inverse direction to the rotation direction of first rotary vane 11 about axial center 30 of rotor 3, and generates a propulsion force in one direction. In this case, first rotary vane 11 and second rotary vane 12 rotate simultaneously, and first rotary vane 11 and second rotary vane 12 generate a propulsion force in the same direction. Hereinafter, unless otherwise specified, motor unit 1 will be described assuming that a direction in which axial center 30 of rotor 3 extends is an up-and-down direction, where a propulsion direction (a direction in which first rotary vane 11 and second rotary vane 12 generate a propulsion force) is up, and an inverse direction to the propulsion force direction is down. The direction used in the present disclosure does not limit the direction when motor unit 1 is in use.

As illustrated in Fig. 2, motor unit 1 further includes base 5. Base 5 includes base plate 50 having a flat plate shape whose thickness direction is parallel to the up-and-down direction. Base plate 50 is formed in a circular shape as viewed from the up-and-down direction.

Stator 20 is along an upper surface, which is a surface on one side in the thickness direction of base plate 50. Stator 20 is fixed to base plate 50. Stator 20 is fixed to base plate 50 by, for example, a fixing tool such as a screw. Stator 20 is formed in an annular shape as viewed from the up-and-down direction. Stator 20 is formed in an annular shape concentric with base plate 50. Stator 20 includes, for example, a stator core and a stator coil wound around the stator core. The stator generates a magnetic force for rotating rotor 3 by energizing the stator coil.

Motor unit 1 further includes two shafts 61, 62. One shaft 61 of two shafts 61, 62 transmits the rotational force of rotor 3 to first rotary vane 11, and rotates first rotary vane 11. Other shaft 62 transmits, to second rotary vane 12, the rotational force in the inverse direction to the rotation direction of rotor 3 output from gear unit 4, and rotates second rotary vane 12 in the inverse direction to first rotary vane 11. Hereinafter, shaft 61 is called first shaft 61, and shaft 62 is called second shaft 62.

Second shaft 62 is formed in a columnar shape extending in the up-and-down direction. Second shaft 62 is rotatably attached to base plate 50. Base 5 further includes bearing 51 attached to the center of base plate 50. The lower end of second shaft 62 is restricted in movement in the up-and-down direction by bearing 51 and is rotatably supported about the central axis of second shaft 62. Base plate 50 may have a part that restricts the movement of second shaft 62 in the up-and-down direction and rotatably supports second shaft 62 about the central axis of second shaft 62. In this case, bearing 51 can be omitted.

Rotor 3 is formed in a covered cylindrical shape (cup shape) opening downward. Rotor 3 covers stator 20 from above in a non-contact state. Rotor 3 includes lid 31 and peripheral wall portion 32. Lid 31 is positioned above stator 20. Lid 31 is formed in a plate shape whose thickness direction is parallel to the up-and-down direction. Lid 31 opposes the upper surface of stator 20 with a gap interposed therebetween.

Lid 31 has center 310, peripheral edge 311, and a plurality of connecting parts 312. Center 310 is positioned at the center of lid 31 as viewed from the up-and-down direction. Center 310 is positioned above a space formed inside annular stator 20. Peripheral edge 311 is formed in an annular shape as viewed from the up-and-down direction. Peripheral edge 311 is positioned around center 310 at an interval from center 310. The plurality of connecting parts 312 are arranged at intervals in a circumferential direction of rotor 3 (circumferential direction of peripheral edge 311) between center 310 and peripheral edge 311. The plurality of connecting parts 312 connect center 310 and peripheral edge 311.

Lid 31 is provided with a plurality of holes 313 arranged in the circumferential direction of rotor 3. Each hole 313 is formed between connecting parts 312 adjacent to each other in the circumferential direction of rotor 3. Each hole 313 penetrates lid 31 in the up-and-down direction. The plurality of holes 313 cause the space above lid 31 and the space inside rotor 3 (space surrounded by peripheral wall portion 32) positioned below lid 31 to communicate with each other. Therefore, the heat generated in stator 20 is less likely to be accumulated inside rotor 3.

Peripheral wall portion 32 of rotor 3 protrudes downward (stator 20 side) from peripheral edge 311 of lid 31. Peripheral wall portion 32 is formed in a cylindrical shape in which the direction in which the central axis extends is parallel to the up-and-down direction. The inner peripheral surface of peripheral wall portion 32 opposes the outer peripheral surface of stator 20 with a slight gap interposed therebetween.

Peripheral wall portion 32 includes a plurality of magnets arranged in the circumferential direction of rotor 3, for example, or one magnet continuous in the circumferential direction of rotor 3. The plurality of magnets are arranged such that magnetic poles on stator 20 side of two adjacent magnets are different, for example. For example, one magnet is magnetized such that the magnetic poles positioned on stator 20 side alternate in the circumferential direction of rotor 3. Rotor 3 rotates about axial center 30 of rotor 3 by magnetic attraction force and repulsive force generated between a magnetic field formed by stator 20 and a plurality of or one magnet. The center of lid 31 of rotor 3 (the center of center 310) is provided with fitting hole 314 penetrating in the up-and-down direction.

First shaft 61 is formed in a cylindrical shape extending in the up-and-down direction. First shaft 61 is positioned around second shaft 62. First shaft 61 is supported by second shaft 62 rotatably about the central axis of second shaft 62. First shaft 61 penetrates lid 31 in the up-and-down direction through fitting hole 314 of rotor 3. First shaft 61 is fixed to lid 31 of rotor 3. First shaft 61 is fixed to lid 31 of rotor 3, for example, by being press-fitted into fitting hole 314. A means for fixing first shaft 61 to rotor 3 is not limited, and for example, first shaft 61 may be fixed by rotor 3 by adhesion or the like.

Rotor 3 is rotatably supported by second shaft 62 via first shaft 61. The rotation center of rotor 3 is defined by first shaft 61 and second shaft 62. Rotor 3 rotates about second shaft 62 together with first shaft 61. Axial center 30, which is the rotation center of rotor 3, overlaps the central axis of first shaft 61 and the central axis of second shaft 62.

First shaft 61 has protrusion 610 protruding upward relative to center 310 of rotor 3. First rotary vane 11 is coupled to protrusion 610.

As illustrated in Fig. 1, first rotary vane 11 includes rotation part 111 and a plurality of blades 110. Rotation part 111 is fixed to protrusion 610 of first shaft 61. Rotation part 111 rotates about the central axis of first shaft 61 together with first shaft 61.

First rotary vane 11 has a total of two blades 110. Each blade 110 is a plate-shaped vane extending in a direction intersecting the up-and-down direction. A base end (one end in the length direction) of each blade 110 is coupled to rotation part 111. Each blade 110 protrudes from rotation part 111 in a direction intersecting the up-and-down direction. When rotor 3 rotates about axial center 30 illustrated in Fig. 2, each blade 110 rotates about the central axis of second shaft 62 together with first shaft 61 and rotation part 111. This causes first rotary vane 11 to generate an upward propulsion force.

The number of blades 110 included in first rotary vane 11 is not limited. For example, first rotary vane 11 may have only one blade 110 or may include three or more of them. Motor unit 1 needs not include first rotary vane 11. In this case, when flying objects 7, 8, 9 are assembled, it is only required to attach separately prepared first rotary vane 11 to first shaft 61.

As illustrated in Fig. 2, base 5 includes accommodating part 52 that accommodates gear unit 4 inside stator 20. A part of accommodating part 52 is configured by gear case 520. Gear case 520 is formed in a cylindrical shape whose central axis direction is parallel to the up-and-down direction. Gear case 520 is formed in a cylindrical shape concentric with stator 20. Gear case 520 is positioned inside stator 20 and is positioned around first shaft 61. Gear case 520 has first opening 521 formed at a lower end of gear case 520 and second opening 522 formed at an upper end of gear case 520.

The lower end surface of gear case 520 is along the upper surface of base plate 50. The upper end surface of gear case 520 is along the lower surface of center 310 of rotor 3. However, gear case 520 is not in contact with rotor 3. Gear case 520 is fixed to base plate 50. Gear case 520 is fixed to base plate 50 with, for example, a fixing tool such as a screw.

First opening 521 of gear case 520 is covered with a center of base plate 50. The center, which is a part of base plate 50, constitutes a bottom of accommodating part 52. Gear case 520 constitutes a peripheral wall portion protruding upward from the bottom of accommodating part 52. Second opening 522 of gear case 520 is covered with center 310, which is a part of rotor 3.

Accommodating part 52 further includes holding member 523. Holding member 523 holds magnetic fluid 13 (see Fig. 6) described below. Holding member 523 is attached to the inner peripheral surface of second opening 522 of gear case 520. Accommodating part 52 includes gear case 520, a center of base plate 50, and holding member 523. Holding member 523 is formed in an annular shape as viewed from the up-and-down direction. Inside of holding member 523 is provided with opening 524 penetrating in the up-and-down direction is formed.

Accommodating part 52 has accommodation space 525 surrounded by gear case 520, center 310 of base plate 50, and holding member 523. Accommodation space 525 is opened upward through opening 524 of holding member 523.

Gear unit 4 is positioned in accommodation space 525. Gear unit 4 includes bevel gears 41, 42, 43, which are a plurality of gears. Gear unit 4 includes, as the plurality of bevel gears, first bevel gear 41, a plurality of second bevel gears 42, and third bevel gear 43. First bevel gear 41, the plurality of second bevel gears 42, and third bevel gear 43 are each made of iron, for example. Each of first bevel gear 41, the plurality of second bevel gears 42, and third bevel gear 43 is not limited to iron. First bevel gear 41, the plurality of second bevel gears 42, and third bevel gear 43 may each be formed of a metal other than iron, or may be formed of a material other than metal.

First bevel gear 41 is positioned below center 310 of rotor 3. First bevel gear 41 is positioned in opening 524 of accommodating part 52 (the upper end of accommodation space 525). The center of first bevel gear 41 is provided with hole 410 penetrating first bevel gear 41 in the up-and-down direction. First shaft 61 penetrates first bevel gear 41 in the up-and-down direction through hole 410 of first bevel gear 41.

The upper end of first bevel gear 41 is positioned between holding member 523 of accommodating part 52 and first shaft 61. The upper end of first bevel gear 41 covers opening 524 of accommodating part 52. That is, first bevel gear 41 constitutes a cover member that covers opening 524 of accommodating part 52. The cover member is not limited to first bevel gear 41. The cover member may be another member that rotates together with rotor 3. The "cover member that rotates together with rotor 3" in the present disclosure also includes a part of rotor 3. Therefore, the cover member may be a member other than first bevel gear 41 or may be a part of rotor 3.

First bevel gear 41 is fixed to center 310 in a state of being in contact with the lower surface of center 310 of rotor 3. First bevel gear 41 is connected to rotor 3. First bevel gear 41 rotates together with rotor 3 about axial center 30 of rotor 3 in the same direction as the rotation direction of rotor 3. The lower surface of first bevel gear 41 is provided with a plurality of teeth arranged in the circumferential direction of first bevel gear 41. First bevel gear 41 is a member different from rotor 3. However, first bevel gear 41 may be a part of rotor 3. That is, first bevel gear 41 may be formed integrally with rotor 3. First bevel gear 41 may be fixed to first shaft 61. In this case, first bevel gear 41 may be fixed to both rotor 3 and first shaft 61. First bevel gear 41 may be fixed only to first shaft 61. For example, first bevel gear 41 is fixed to first shaft 61 by press-fitting first shaft 61 into hole 410. In this case, first shaft 61 rotates integrally with rotor 3. A means for fixing first bevel gear 41 to first shaft 61 is not limited. For example, first bevel gear 41 may be fixed to first shaft 61 by adhesion or the like.

The plurality of second bevel gears 42 are positioned below first bevel gear 41. The plurality of second bevel gears 42 are arranged at intervals in the circumferential direction of first bevel gear 41. Gear unit 4 includes a total of three second bevel gears 42. Base 5 further includes a plurality of spindles 53 that respectively support the plurality of second bevel gears 42. Each spindle 53 is attached to gear case 520. Each spindle 53 protrudes inward from gear case 520. Second bevel gears 42 are each attached to corresponding spindle 53 rotatably about a rotation shaft orthogonal to axial center 30 of rotor 3.

The outer peripheral surface of each of second bevel gears 42 is provided with a plurality of teeth arranged in the circumferential direction of second bevel gear 42. A part of the plurality of teeth of each of second bevel gears 42 mesh with a part of the plurality of teeth of first bevel gear 41. When first bevel gear 41 rotates about axial center 30 of rotor 3, each of second bevel gears 42 rotates about corresponding spindle 53. Spindles 53 may each be attached rotatably to gear case 520. In this case, each of second bevel gears 42 may be fixed in a non-rotatable manner with respect to corresponding spindle 53. The number of second bevel gears 42 included in gear unit 4 is not limited. For example, gear unit 4 may include only one, only two, or four or more second bevel gears 42.

Third bevel gear 43 is positioned below the plurality of second bevel gears 42 and first shaft 61. Third bevel gear 43 is positioned at the lower end of accommodation space 525 of accommodating part 52. The center of third bevel gear 43 is provided with fitting hole 430 penetrating third bevel gear 43 in the up-and-down direction. Second shaft 62 penetrates third bevel gear 43 in the up-and-down direction through fitting hole 430 of third bevel gear 43. Third bevel gear 43 is fixed to second shaft 62. Third bevel gear 43 rotates integrally with second shaft 62 together with second shaft 62. For example, third bevel gear 43 is fixed to second shaft 62 by press-fitting second shaft 62 into fitting hole 430. A means for fixing third bevel gear 43 to second shaft 62 is not limited. For example, third bevel gear 43 may be fixed to second shaft 62 by adhesion or the like.

The upper surface of third bevel gear 43 is provided with a plurality of teeth arranged in the circumferential direction of third bevel gear 43. A part of the plurality of teeth of third bevel gear 43 mesh with a part of the plurality of teeth of each second bevel gear 42. When first bevel gear 41 rotates and each of the second bevel gears rotates about a rotation axial center orthogonal to axial center 30 of rotor 3, third bevel gear 43 rotates together with second shaft 62 about the central axis of second shaft 62 in an inverse direction to the rotation direction of first bevel gear 41.

First bevel gear 41, the plurality of second bevel gears 42, and third bevel gear 43 are each a straight bevel gear in which tooth traces extend linearly. However, the present invention is not limited to this. For example, first bevel gear 41, the plurality of second bevel gears 42, and third bevel gear 43 may each be a spiral bevel gear in which tooth traces are curved in a curved shape in order to suppress vibration and noise. The bevel gear included in gear unit 4 is not limited to a bevel gear. The bevel gear included in gear unit 4 may be a gear other than the bevel gear.

Second shaft 62 has protrusion 620 protruding upward relative to first shaft 61. Second rotary vane 12 is coupled to protrusion 620. Second rotary vane 12 is positioned above first rotary vane 11. Second rotary vane 12, first rotary vane 11, rotor 3, and stator 20 are arranged in this order in the up-and-down direction.

Second rotary vane 12 includes rotation part 121 and a plurality of blades 120. Rotation part 121 is fixed to protrusion 620 of second shaft 62. Rotation part 121 rotates about the central axis of second shaft 62 together with second shaft 62.

Second rotary vane 12 has a total of two blades 120. Each blade 120 is a plate-shaped vane extending in a direction intersecting the up-and-down direction. A base end (one end in the length direction) of each blade 120 is coupled to rotation part 121. Each blade 120 protrudes in a direction intersecting the up-and-down direction from rotation part 121. When rotor 3 rotates about axial center 30, each blade 120 rotates about the central axis of second shaft 62 together with third bevel gear 43, second shaft 62, and rotation part 121. This makes second rotary vane 12 generate an upward propulsion force.

The number of blades 120 included in second rotary vane 12 is not limited. For example, second rotary vane 12 may have only one blade 120 or may include three or more of them. Motor unit 1 needs not include second rotary vane 12. In this case, when flying objects 7, 8, 9 are assembled, it is only required to attach separately prepared second rotary vane 12 to second shaft 62.

Motor unit 1 further includes a lubricant that lubricates the mesh parts of the plurality of bevel gears 41, 42, 43. The lubricant is accommodated in accommodating part 52 together with the plurality of bevel gears 41, 42, 43. The lubricant adheres to the plurality of bevel gears 41, 42, 43. The lubricant is, for example, lubricating oil or grease.

Fig. 6 is an enlarged cross-sectional view of a part indicated by A1 in Fig. 2. Motor unit 1 further includes magnetic fluid (magnetic fluid seal) 13 illustrated in Fig. 6. Magnetic fluid 13 is a liquid containing a base liquid and a large number of magnetic particles dispersed in the base liquid. The magnetic particles are, for example, manganese zinc ferrite, iron oxide-based fine particles, spinel ferrite, γ-hematite, or the like. The base liquid is, for example, a hydrocarbon-based oil, a fluorine-based oil, water, or the like. Magnetic fluid 13 seals between accommodating part 52 and first bevel gear (cover member) 41 covering opening 524 of accommodating part 52. The lubricant accommodated in accommodating part 52 is suppressed from coming out from between gear case 520 and first bevel gear 41.

Magnetic fluid 13 is held by holding member 523 of accommodating part 52. Holding member 523 includes magnet 526 and a pair of magnetic pole pieces 527, 528. Magnet 526 is a plate formed in an annular shape as viewed from the up-and-down direction. The outer peripheral end surface of magnet 526 is along the inner peripheral surface of second opening 522. Each of the pair of magnetic pole pieces 527, 528 is formed of a soft magnetic material. Magnetic pole pieces 527, 528 are each an iron plate formed in an annular shape as viewed from the up-and-down direction. The pair of magnetic pole pieces 527, 528 extend along the upper surface and the lower surface, respectively, of magnet 526. The outer peripheral end surface of each of magnetic pole pieces 527, 528 is along the inner peripheral surface of second opening 522.

The inner end of each of magnetic pole pieces 527, 528 protrudes inward relative to the inner peripheral surface of magnet 526. The inner peripheral end surface of magnet 526 and the inner peripheral end surface of each of magnetic pole pieces 527, 528 oppose the outer peripheral surface of first bevel gear 41. Opening 524 of accommodating part 52 includes a hole formed inside magnet 526 and a hole formed inside each of magnetic pole pieces 527, 528. First bevel gear 41 is positioned in opening 524.

Holding member 523 forms a magnetic circuit with magnet 526, the pair of magnetic pole pieces 527, 528, and first bevel gear 41 made of iron. The magnetic circuit has, as a magnetic gap, gap 14 between the inner peripheral end surfaces of the pair of magnetic pole pieces 527, 528 and the outer peripheral surface of first bevel gear 41. The magnetic circuit holds magnetic fluid 13 in a state of being filled in gap 14. Magnetic fluid 13 held in this manner seals between the inner peripheral surface of opening 524 of accommodating part 52 and the outer peripheral surface of first bevel gear 41. This suppresses the lubricant in accommodating part 52 from coming out of accommodating part 52. First bevel gear 41 may be formed of a soft magnetic material other than iron. The bevel gear other than first bevel gear 41 of gear unit 4 may be formed of a material other than the soft magnetic material. Magnetic fluid 13 may be held by a means other than holding member 523. Motor unit 1 needs not include magnetic fluid 13 and holding member 523.

In the plurality of bevel gears 41, 42, 43 included in gear unit 4 illustrated in Fig. 2, only the upper end of first bevel gear 41 connected to rotor 3 is positioned slightly outside relative to stator 20 in the up-and-down direction. All parts of the plurality of bevel gears 41, 42, 43 other than the upper end of first bevel gear 41 are positioned inside stator 20. That is, most of the plurality of bevel gears 41, 42, 43 are positioned inside stator 20. The term "most" means half or more.

Therefore, for example, as compared with a case where the plurality of bevel gears 41, 42, 43 are positioned upward or downward relative to stator 20, an increase in size of motor unit 1 in the up-and-down direction is suppressed. In this case, first rotary vane 11 and second rotary vane 12 can be disposed near stator 20 and rotor 3 in the up-and-down direction. Therefore, the length in the up-and-down direction of each of shafts 61, 62 can be shortened. Moreover, it is possible to suppress vibration of the upper end of each shafts 61, 62 during rotation of rotor 3. Therefore, it is possible to suppress each shafts 61, 62 from deforming due to wind or the like. For example, it is not necessary to enhance the strength of shafts 61, 62 by thickening shafts 61, 62. It is also not necessary to enhance the strength of the part supporting each of shafts 61, 62 such as bearing 51. Vibration of each of blades 110, 120 during flight of flying objects 7, 8, 9 is also suppressed. Therefore, during flight of flying objects 7, 8, 9, data can be accurately acquired by the sensors included in the flight controllers of flying objects 7, 8, 9. It becomes also possible to reduce the size of a cushion for protecting control devices of flying objects 7, 8, 9, such as sponge and rubber, or to omit the cushion.

Since gear unit 4 is disposed in a space formed inside annular stator 20, it is also possible to suppress an increase in size of motor unit 1 in a direction orthogonal to the up-and-down direction. Since stator 20 exists around gear unit 4, it is also possible to prevent dirt, dust, insects, or the like from entering the inside of stator 20 in which gear unit 4 exists.

The plurality of bevel gears 41, 42, 43 included in gear unit 4 may be entirely disposed inside stator 20. A part of the plurality of bevel gears 41, 42, 43 included in gear unit 4 may be disposed downward relative to stator 20. That is, at least a part of the plurality of bevel gears 41, 42, 43 is only required to be disposed inside stator 20.

Fig. 3 illustrates flying object 7 including motor unit 1. Flying object 7 is an unmanned aircraft capable of autonomous flight or flight by remote control. Flying object 7 is large and can be used for agrochemical spraying, transportation, and the like. The size of flying object 7 is not limited. The flying object may be a manned flying object.

Flying object 7 is a multi-copter. Flying object 7 includes body 70 and a plurality of rotors. Flying object 7 includes a plurality of motor units 1 and a plurality of single rotors 71 as the plurality of rotors. That is, flying object 7 includes motor unit 1 used as a contra-rotating rotor and single rotor 71 that rotates only one rotary vane 710. Specifically, flying object 7 includes four motor units 1 and two single rotors 71. The number of motor units 1 and the number of single rotors 71 included in flying object 7 are not limited.

Body 70 includes housing 700, a flight controller, a power source, and a plurality of arms 701. The flight controller and the power source are built in housing 700, for example. The flight controller and the power source may be attached to the outer surface of housing 700. Body 70 includes, as the plurality of arms 701, the same number of arms 701 as the number of rotors included in flying object 7 (the number obtained by adding the number of motor units 1 and the number of single rotors 71). Arms 701 each protrude in a direction intersecting the up-and-down direction from housing 700. Each arm 701 is attached with motor unit 1 or single rotor 71. Each motor unit 1 is attached to arm 701 such that first rotary vane 11 and second rotary vane 12 are positioned above stator 20, and the propulsion force generated by each of first rotary vane 11 and second rotary vane 12 acts upward. Each single rotor 71 is also attached to arm 701 such that the propulsion force generated by rotary vane 710 acts upward.

The flight controller includes, for example, a control unit and a plurality of sensors. The control device is, for example, a microcontroller, and includes a processor and a memory as hardware. The control device controls the flight of flying object 7 by a processor executing a program recorded in a memory. The plurality of sensors can include an acceleration sensor, a gyro sensor, a geomagnetic sensor, an atmospheric pressure sensor (altimeter), a global positioning system (GPS) sensor, and an image sensor. On the basis of data acquired by the plurality of sensors, the control device controls the plurality of motor units 1 and the plurality of single rotors 71, and controls a flight direction, a flight speed, a flight attitude, and the like of flying object 7.

Control of each motor unit 1 by the flight controller is performed, for example, via an electric speed controller (ESC). The ESC may be included in body 70, or may be included in motor unit 1 or single rotor 71. The power source supplies electric power to the flight controller, the plurality of motor units 1, the plurality of single rotors 71, and the like. The power source is, for example, a battery such as a lithium polymer battery, a lithium ion battery, a nickel hydrogen battery, or the like. Body 70 may further include a remote controller or a camera device. Body 70 may further include a communication device that communicates with an external device such as a personal computer.

Fig. 4 illustrates another flying object 8 including motor unit 1 of the present exemplary embodiment. Flying object 8 has elements common to flying object 7 illustrated in Fig. 3. For this reason, the description of matters of flying object 8 overlapping with flying object 7 will be omitted below.

Flying object 8 includes body 80 and a plurality of motor units 1. Body 80 includes a plurality of main wings 81 and a plurality of empennages 82. Similarly to body 70 of flying object 7, body 80 also includes a flight controller and a power source.

Main wings 81 are each attached with motor unit 1. When the flight direction of flying object 8 is defined as forward, each motor unit 1 is attached to main wing 81 such that first rotary vane 11 and second rotary vane 12 are positioned in front of stator 20, and the propulsion force generated by each of first rotary vane 11 and second rotary vane 12 acts forward.

Fig. 5 illustrates still another flying object 9 including motor unit 1 of the present exemplary embodiment. Flying object 9 has elements common to flying object 8 illustrated in Fig. 4. For this reason, the description of matters of flying object 9 overlapping with flying object 8 will be omitted below.

Flying object 9 includes body 90 and one motor unit 1. Body 90 has the same configuration as that of body 80 of flying object 8 illustrated in Fig. 4. Motor unit 1 is attached to a nose, which is a front end of body 90. Motor unit 1 is attached to body 90 such that first rotary vane 11 and second rotary vane 12 are positioned in front of stator 20, and the propulsion force generated by first rotary vane 11 and second rotary vane 12 acts in front.

In the above description, the gear has been described with, as an example, the configuration in which bevel gears 41, 42, 43 are used. The gear is not limited to the bevel gear as long as the same effects as those described above can be obtained. For example, the gear can have a similar configuration even when a spur gear is used.

### (2) Aspects

As is obvious from the exemplary embodiment described above, motor unit (1) of a first aspect includes the following configuration. Motor unit (1) includes stator (20), rotor (3), and gear unit (4). Rotor (3) is positioned around stator (20) and rotates by a magnetic force generated in stator (20) to generate a rotational force of first rotary vane (11). Gear unit (4) has bevel gears (41, 42, 43), which are a plurality of gears. Gear unit (4) converts the rotational force generated by rotor (3) to generate a rotational force for rotating second rotary vane (12) in an inverse direction to the rotation direction of first rotary vane (11). At least a part of the plurality of bevel gears (41, 42, 43) are positioned inside stator (20).

According to this aspect, since at least a part of the plurality of bevel gears (41, 42, 43) are positioned inside stator (20), it is possible to suppress an increase in size in the direction in which axial center (30) of motor unit (1) extends. First rotary vane (11) and second rotary vane (12) can be disposed close to stator (20) and rotor (3) in the direction in which axial center (30) of rotor (3) extends. For this reason, by shortening the members such as shafts (61, 62) that transmit the rotational force of rotor (3) to first rotary vane (11) and second rotary vane (12), it is possible to suppress vibration of the members such as shafts (61, 62). This makes it possible to achieve weight reduction such as thinning of members such as shafts (61, 62). When the members such as shafts (61, 62) are made light as described above, the weight of entire flying object (7, 8, 9) can be reduced in a case where motor unit (1) of the present aspect is mounted on flying object (7, 8, 9), and the time or distance in which flying object (7, 8, 9) flies per unit can be extended.

Motor unit (1) of a second aspect can be achieved by a combination with the first aspect. In the second aspect, most of the plurality of bevel gears (41, 42, 43) are positioned inside stator (20). Specifically, more than half of the plurality of bevel gears (41, 42, 43) are positioned inside stator (20).

According to this aspect, it is possible to further suppress an increase in size in the direction in which axial center (30) of motor unit (1) extends.

Motor unit (1) of a third aspect can be achieved by a combination with the first or second aspect. Motor unit (1) of the third aspect further includes first shaft (61) and second shaft (62). First shaft (61) transmits the rotational force generated by rotor (3) to first rotary vane (11). Second shaft (62) transmits the rotational force generated by gear unit (4) to second rotary vane (12). First shaft (61) is formed in a tubular shape, is positioned around second shaft (62), and is rotatably supported by second shaft (62).

According to this aspect, it is possible to support first shaft (61) by using second shaft (62) that transmits, to second rotary vane (12), the rotational force output by gear unit (4). Therefore, it is possible to suppress an increase in size in a direction orthogonal to axial center (30) of motor unit (1).

Motor unit (1) of a fourth aspect can be achieved by a combination with any one of the first to third aspects. The plurality of bevel gears (41, 42, 43) of the fourth aspect include first bevel gear (41) connected to rotor (3).

According to this aspect, it is possible to further suppress an increase in size of motor unit (1).

Motor unit (1) of a fifth aspect can be achieved by a combination with any one of the first to third aspects. Gear unit (4) of the fifth aspect includes first bevel gear (41), second bevel gear (42), and third bevel gear (43) as a plurality of bevel gears. First bevel gear (41) rotates in the rotation direction of rotor (3) by the rotational force generated by rotor (3). Second bevel gear (42) meshes with first bevel gear (41). Third bevel gear (43) meshes with second bevel gear (42) and rotates in a direction opposite to first bevel gear (41) to generate a rotational force of second rotary vane (12).

According to this aspect, by using first bevel gear (41), second bevel gear (42), and third bevel gear (43), it is possible to convert the rotational force generated in rotor (3) into the rotational force in the opposite direction for rotating second rotary vane (12).

Motor unit (1) of a sixth aspect can be achieved by a combination with the first or second aspect. The sixth aspect has the following configuration. Motor unit (1) further includes first shaft (61) and second shaft (62). First shaft (61) transmits the rotational force generated by rotor (3) to first rotary vane (11). Second shaft (62) transmits the rotational force generated by gear unit (4) to second rotary vane (12). Gear unit (4) includes first bevel gear (41), second bevel gear (42), and third bevel gear (43) as the plurality of bevel gears. First bevel gear (41) rotates in the rotation direction of rotor (3) by the rotational force generated by rotor (3). Second bevel gear (42) meshes with first bevel gear (41). Third bevel gear (43) meshes with second bevel gear (42) and rotates in a direction opposite to first bevel gear (41) to generate a rotational force of second rotary vane (12). First shaft (61) rotates integrally with first bevel gear (41). Second shaft (62) rotates integrally with third bevel gear (43).

According to this aspect, by using first bevel gear (41), second bevel gear (42), and third bevel gear (43), it is possible to convert the rotational force generated in rotor (3) into the rotational force in the inverse direction for rotating second rotary vane (12). First rotary vane (11) can be rotated by first shaft (61) that rotates integrally with first bevel gear (41). Second rotary vane (12) can be rotated by second shaft (62) that rotates integrally with third bevel gear (43).

Motor unit (1) of a seventh aspect can be achieved by a combination with the fifth or sixth aspect. First bevel gear (41) of the seventh aspect is a bevel gear connected to rotor (3).

According to this aspect, it is possible to further suppress an increase in size of motor unit (1).

Motor unit (1) of an eighth aspect can be achieved by a combination with any one of the first to seventh aspects. Motor unit (1) of the eighth aspect further includes a lubricant, a cover member (first bevel gear 41), accommodating part (52), and magnetic fluid (13). The lubricant lubricates the mesh part of the plurality of bevel gears (41, 42, 43). Cover member (41) rotates together with rotor (3). Accommodating part (52) is positioned inside stator (20), includes opening (524) covered by cover member (41), and accommodates the plurality of bevel gears (41, 42, 43) and the lubricant. Magnetic fluid (13) seals between accommodating part (52) and cover member (41).

According to this aspect, it is possible to cover opening (524) of accommodating part (52) using cover member (41) that rotates together with rotor (3), and it is possible to further suppress an increase in size of motor unit (1). By sealing between accommodating part (52) and cover member (41) with magnetic fluid (13), it is possible to suppress the lubricant in accommodating part (52) from coming out to the outside.

Motor unit (1) of a ninth aspect can be achieved by a combination with any one of the first to eighth aspects. Motor unit (1) of the ninth aspect further includes first rotary vane (11) and second rotary vane (12).

Flying object (7, 8, 9) of a tenth aspect has the following configuration. Flying object (7, 8, 9) includes a motor unit (1) and body (70, 80, 90). Motor unit (1) is motor unit (1) of the ninth aspect. Motor unit (1) is attached to body (70, 80, 90).

According to this aspect, it is possible to reduce the weight of members such as shafts (61, 62) of motor unit (1). Therefore, it is possible to reduce the weight of entire flying object (7, 8, 9), and it is possible to extend the time or distance in which flying object (7, 8, 9) flies per unit.

### INDUSTRIAL APPLICABILITY

Motor unit (1) and flying object (7, 8, 9) of the present disclosure can be used in various fields such as household toys in addition to industries such as agriculture, transportation, and service industries.

### REFERENCE MARKS IN THE DRAWINGS

- 1: motor unit
- 11: first rotary vane
- 12: second rotary vane
- 13: magnetic fluid
- 20: stator
- 3: rotor
- 30: axial center
- 4: gear unit
- 41: first bevel gear
- 42: second bevel gear
- 43: third bevel gear
- 52: accommodating part
- 521: first opening
- 522: second opening
- 524: opening
- 61: first shaft
- 62: second shaft
- 7: flying object
- 70: body
- 8: flying object
- 80: body
- 9: flying object
- 90: body

## Claims

1. A motor unit (1) comprising
a stator (20);
a rotor (3) positioned around the stator and configured to be rotated by a magnetic force generated by the stator to generate a rotational force of a first rotary vane (11); and
a gear unit (4) that includes a plurality of gears (41, 42, 43) and configured to convert the rotational force generated by the rotor to rotate a second rotary vane (12) in an inverse direction to a rotation direction of the first rotary vane,
wherein at least some of the plurality of gears are positioned inside the stator.

2. The motor unit according to Claim 1, wherein half or more of the plurality of gears are positioned inside the stator.

3. The motor unit according to Claim 1 or 2, further comprising:
a first shaft (61) that transmits the rotational force generated by the rotor to the first rotary vane; and
a second shaft (62) that transmits the rotational force generated by the gear unit to the second rotary vane,
wherein the first shaft is formed in a tubular shape, positioned around the second shaft, and rotatably supported by the second shaft.

4. The motor unit according to any one of Claims 1 to 3, wherein the plurality of gears include a gear (41) connected to the rotor.

5. The motor unit according to any one of Claims 1 to 3, wherein
the gear unit includes, as the plurality of gears,
a first bevel gear (41) that rotates in a rotation direction of the rotor by the rotational force generated by the rotor,
a second bevel gear (42) that meshes with the first bevel gear, and
a third bevel (43) that meshes with the second bevel gear and rotates in a direction opposite to the first bevel gear to generate a rotational force of the second rotary vane.

6. The motor unit according to Claim 1 or 2, further comprising:
a first shaft that transmits the rotational force generated by the rotor to the first rotary vane; and
a second shaft that transmits the rotational force generated by the gear unit to the second rotary vane,
wherein the gear unit includes, as the plurality of gears,
a first bevel gear that rotates in a rotation direction of the rotor by the rotational force generated by the rotor,
a second bevel gear that meshes with the first bevel gear, and
a third bevel gear that meshes with the second bevel gear and rotates in a direction opposite to the first bevel gear to generate a rotational force of the second rotary vane,
the first shaft rotates integrally with the first bevel gear, and
the second shaft rotates integrally with the third bevel gear.

7. The motor unit according to Claim 5 or 6, wherein the first bevel gear is a bevel gear connected to the rotor.

8. The motor unit according to any one of Claims 1 to 7 further comprising:
a lubricant that lubricates a mesh part of the plurality of gears;
a cover member that rotates together with the rotor;
an accommodating part (52) that is positioned inside the stator, includes an opening (524) covered by the cover member, and accommodates the plurality of gears and the lubricant; and
a magnetic fluid (13) that seals between the accommodating part and the cover member.

9. The motor unit according to any one of Claims 1 to 8, further comprising the first rotary vane and the second rotary vane.

10. A flying object (7, 8, 9) comprising:
the motor unit according to Claim 9; and
a body (70, 80, 90) attached with the motor unit.

## Patentansprüche

1. Motoreinheit (1) mit:
einem Stator (20);
einem Rotor (3), der um den Stator herum angeordnet und konfiguriert ist, um durch eine vom Stator erzeugte Magnetkraft gedreht zu werden, um eine Rotationskraft eines ersten Drehflügels (11) zu erzeugen; und
einer Getriebeeinheit (4), die eine Vielzahl von Zahnrädern (41, 42, 43) umfasst und konfiguriert ist, um die vom Rotor erzeugte Drehkraft umzuwandeln, um einen zweiten Drehflügel (12) in eine zur Drehrichtung des ersten Drehflügels entgegengesetzte Richtung zu drehen,
wobei zumindest einige aus der Vielzahl von Zahnrädern innerhalb des Stators positioniert sind.

2. Motoreinheit nach Anspruch 1, wobei die Hälfte oder mehr aus der Vielzahl von Zahnrädern innerhalb des Stators positioniert sind.

3. Motoreinheit nach Anspruch 1 oder 2, die ferner umfasst:
eine erste Welle (61), die die vom Rotor erzeugte Drehkraft auf den ersten Drehflügel überträgt; und
eine zweite Welle (62), die die von der Getriebeeinheit erzeugte Drehkraft auf den zweiten Drehflügel überträgt,
wobei die erste Welle röhrenförmig ausgebildet ist, um die zweite Welle herum positioniert ist und drehbar durch die zweite Welle gestützt wird.

4. Motoreinheit nach einem der Ansprüche 1 bis 3, wobei die Vielzahl von Zahnrädern ein mit dem Rotor verbundenes Zahnrad (41) umfasst.

5. Motoreinheit nach einem der Ansprüche 1 bis 3, wobei
das Getriebe als Vielzahl von Zahnrädern umfasst:
ein erstes Kegelrad (41), das sich durch die vom Rotor erzeugte Drehkraft in eine Drehrichtung des Rotors dreht,
ein zweites Kegelrad (42), das mit dem ersten Kegelrad kämmt, und
ein drittes Kegelrad (43), das mit dem zweiten Kegelrad kämmt und sich in eine dem ersten Kegelrad entgegengesetzte Richtung dreht, um eine Drehkraft des zweiten Drehflügels zu erzeugen.

6. Motoreinheit nach Anspruch 1 oder 2, die ferner umfasst:
eine erste Welle, die die vom Rotor erzeugte Drehkraft auf den ersten Drehflügel überträgt; und
eine zweite Welle, die die von der Getriebeeinheit erzeugte Drehkraft auf den zweiten Drehflügel überträgt,
wobei die Getriebeeinheit als die Vielzahl von Zahnrädern umfasst:
ein erstes Kegelrad, das sich durch die vom Rotor erzeugte Drehkraft in eine Drehrichtung des Rotors dreht,
ein zweites Kegelrad, das mit dem ersten Kegelrad kämmt, und
ein drittes Kegelrad, das mit dem zweiten Kegelrad kämmt und sich in eine dem ersten Kegelrad entgegengesetzte Richtung dreht, um eine Drehkraft des zweiten Drehflügels zu erzeugen, wobei
die erste Welle sich integral mit dem ersten Kegelrad dreht, und
die zweite Welle sich integral mit dem dritten Kegelrad dreht.

7. Motoreinheit nach Anspruch 5 oder 6, wobei das erste Kegelrad ein mit dem Rotor verbundenes Kegelrad ist.

8. Motoreinheit nach einem der Ansprüche 1 bis 7, die ferner umfasst:
ein Schmiermittel, das einen Eingriffsteil der Vielzahl von Zahnrädern schmiert;
ein Abdeckelement, das sich zusammen mit dem Rotor dreht;
ein Aufnahmeteil (52), das innerhalb des Stators positioniert ist, eine durch das Abdeckelement abgedeckte Öffnung (524) aufweist und die Vielzahl von Zahnrädern und das Schmiermittel aufnimmt; und
eine magnetisches Fluid (13), das zwischen dem Aufnahmeteil und dem Abdeckelement abdichtet.

9. Motoreinheit nach einem der Ansprüche 1 bis 8, die außerdem den ersten Drehflügel und den zweiten Drehflügel umfasst.

10. Flugobjekt (7, 8, 9) mit:
der Motoreinheit nach Anspruch 9; und
einem Körper, der mit der Motoreinheit verbunden ist.

## Revendications

1. Unité motrice (1) comprenant :
un stator (20);
un rotor (3) positionné autour du stator et configuré pour être mis en rotation par une force magnétique générée par le stator pour générer une force de rotation d'une première palette rotative (11) ; et
une unité d'engrenages (4) qui comprend une pluralité d'engrenages (41, 42, 43) et configurée pour convertir la force de rotation générée par le rotor pour faire tourner une seconde palette rotative (12) dans une direction inverse à une direction de rotation de la première palette rotative,
dans lequel au moins certains de la pluralité d'engrenages sont positionnés à l'intérieur du stator.

2. Unité motrice selon la revendication 1, dans laquelle la moitié ou plus de la pluralité d'engrenages sont positionnés à l'intérieur du stator.

3. Unité motrice selon la revendication 1 ou 2, comprenant en outre :
nn premier arbre (61) qui transmet la force de rotation générée par le rotor à la première palette rotative ; et
un deuxième arbre (62) qui transmet la force de rotation générée par l'engrenage à la deuxième palette rotative,
dans lequel le premier arbre est formé sous une forme tubulaire, positionné autour du deuxième arbre et supporté de manière rotative par le deuxième arbre.

4. Unité motrice selon l'une quelconque des revendications 1 à 3, dans laquelle la pluralité d'engrenages comprend un engrenage (41) relié au rotor.

5. Unité motrice selon l'une quelconque des revendications 1 à 3, dans laquelle l'unité d'engrenages comprend, en tant que pluralité d'engrenages, un premier engrenage conique (41) qui tourne dans une direction de rotation du rotor par la force de rotation générée par le rotor, un deuxième engrenage conique (42) qui s'engrène avec le premier engrenage conique, et un troisième engrenage conique (43) qui s'engrène avec le deuxième engrenage conique et tourne dans une direction opposée au premier engrenage conique pour générer une force de rotation de la deuxième palette rotative.

6. Unité motrice selon la revendication 1 ou 2, comprenant en outre :
un premier arbre qui transmet la force de rotation générée par le rotor à la première palette rotative ; et
un deuxième arbre qui transmet la force de rotation générée par le réducteur à la deuxième palette rotative,
dans lequel l'unité d'engrenages comprend, en tant que pluralité d'engrenages,
un premier engrenage conique qui tourne dans une direction de rotation du rotor par la force de rotation générée par le rotor,
un deuxième engrenage conique qui s'engrène avec le premier engrenage conique, et
un troisième engrenage conique qui s'engrène avec le deuxième engrenage conique et tourne dans une direction opposée au premier engrenage conique pour générer une force de rotation de la deuxième palette rotative,
le premier arbre tourne de manière solidaire avec le premier engrenage conique, et
le deuxième arbre tourne de manière solidaire avec le troisième engrenage conique.

7. Unité motrice selon la revendication 5 ou 6, dans laquelle le premier engrenage conique est un engrenage conique relié au rotor.

8. Unité motrice selon l'une quelconque des revendications 1 à 7, comprenant en outre :
un lubrifiant qui lubrifie une partie engrenée de la pluralité d'engrenages ;
un élément de couvercle qui tourne avec le rotor ;
une partie de logement (52) qui est positionnée à l'intérieur du stator, comprend une ouverture (524) recouverte par l'élément de couvercle, et loge la pluralité d'engrenages et le lubrifiant ; et
un fluide magnétique (13) qui assure l'étanchéité entre la partie de logement et l'élément de couvercle.

9. Unité motrice selon l'une quelconque des revendications 1 à 8, comprenant en outre la première palette rotative et la seconde palette rotative.

10. Objet volant (7, 8, 9) comprenant :
l'unité motrice selon la revendication 9 ; et
un corps (70, 80, 90) fixé à l'unité motrice.
